# EUROPEAN PATENT APPLICATION

(11) **EP 3 832 859 A1**
(43) Date of publication of application: **09.06.2021**
(21) Application number: 20208582.5
(22) Date of filing: 19.11.2020
(51) Int. Cl.: H02K 15/03, H02K 21/22, H01F 13/00

(54) **VIBRATION AND NOISE REDUCTION MOTOR, ROTOR MAGNETIZING STRUCTURE OF MOTOR, AND SKEW MAGNETIZING YOKE**

(30) Priority: 02.12.2019 KR 20190157977
(71) Applicant: LG Electronics Inc., Yeongdeungpo-gu Seoul 07336 (KR)
(72) Inventor: NAM, Hyoung Uk, 08592 Seoul (KR); KO, Hyojin, 08592 Seoul (KR); SONG, Jun Young, 08592 Seoul (KR)
(74) Representative: Vossius & Partner Patentanwälte Rechtsanwälte mbB

(57) **Abstract**

A vibration and noise reduction motor, a rotor magnetizing structure of a motor, and a skew magnetizing yoke. The vibration and noise reduction motor includes a stator that is concentric with a shaft and axially fixed and a rotor including a rotor core configured to surround the stator and a plurality of block magnets disposed in the rotor core and configured to face the stator and surround the stator, where an air gap is provided between the plurality of block magnets and the stator, and each piece of the plurality of block magnets includes a plurality of poles and the plurality of block magnets are magnetized by a skew magnetizing yoke and has a continuous skew shape such that the plurality of poles provided for each piece are each inclined by a skew angle of the skew magnetizing yoke.

## Description

### BACKGROUND

### 1. Field of the Disclosure

The present disclosure relates to a vibration and noise reduction motor, a rotor magnetizing structure of a motor, and a skew magnetizing yoke.

### 2. Description of Related Art

Washing machine drive motors may not use a single-pole magnet, but may use a block magnet having two or more poles.

In addition, the washing machine drive motors may include a magnetizing yoke to axially magnetize the block magnet having the two or more poles, which causes vibration and noise when the washing machine is driven. Therefore, efforts have been made to reduce the vibration and the noise of the washing machine drive motor.

However, other magnets may not efficiently reduce an electromagnetic excitation force due to a teeth shape of the other magnetizers even if the other magnets have a skew structure to reduce the vibration and the noise.

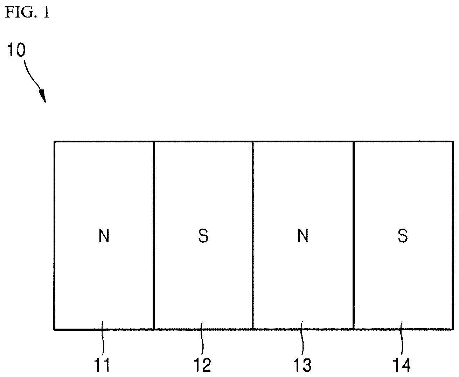

FIG. 1 shows a block magnet in related art. A block magnet 10 in the related art shown in FIG. 1 is one-piece magnet having four poles and includes axially magnetized four poles 11, 12, 13, and 14.

However, the block magnet 10 in related art having the above structure is used for a motor (e.g., a washing machine motor), which causes the vibration and the noise when the motor is driven.

As a method for reducing the vibration and the noise occurring when the motor is driven, the block magnet 10 has the skew structure.

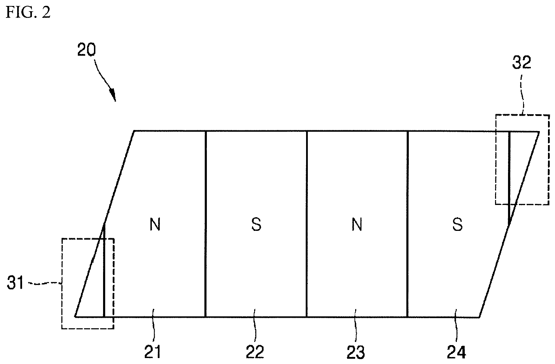

FIG. 2 shows a skewed block magnet in related art. FIG. 2 shows an example block magnet 20 with a changed shape to have a skew structure.

A block magnet 20 shown in FIG. 2 is one-piece block magnet having four poles, where four poles 21, 22, 23, and 24 are magnetized for each piece, and a shape of the block magnet 20 is changed to a parallelogram shape to have the skew structure.

For example, a teeth shape of a magnetizer (e.g., a magnetizing yoke) to apply a magnetizing magnetic field to the block magnet 20 is maintained and the shape of the block magnet 20 is changed to the parallelogram shape.

However, even if the shape of the block magnet 20 is changed to the above shape, only two portions 31 and 32 have a skew effect due to a teeth shape of the magnetizing yoke in related art. Therefore, the block magnet 20 may be difficult to provide the skew effects to reduce electromagnetic excitation force such as cogging torque and torque ripple in a motor.

Korean Patent Publication No. 10-2007-0022457 (hereinafter; referred to as "related art document 1"), which is a related art document, discloses a motor structure.

According to the related art document 1, the motor includes a ring magnet having a skew magnetizing structure and the ring magnet has lower energy than that of a ferrite magnet and has degraded motor output. For example, the ring magnet is different from the ferrite block magnet having a plurality of poles in configuration. The related art document 1 does not disclose the block magnet having a skew structure.

As another related art, US 8916999B2 (hereinafter; referred to as "related art document 2") discloses a motor including a segment conductor coil.

In this configuration, the disclosed motor includes a rotor core coupled to a rotary shaft of a rotor and a plurality of magnets are mounted on an outer circumferential surface of the rotor core at a circumference and are spaced apart from one another by a same distance corresponding to a same angle. This configuration only suggests that the plurality of magnets are each skewed by a predetermined angle and does not disclose a technical solution for using a skew structure while maintaining the shape of the ferrite block magnet having the plurality of poles.

### <Related Art Document>

(Patent Document 1) KR Patent Publication No. 10-2007-0022457

### SUMMARY OF THE DISCLOSURE

The present disclosure provides a vibration and noise reduction motor including a block type ferrite magnet with a plurality of poles. The block type ferrite magnet has a skew structure to reduce cogging torque, torque ripple, and total harmonic distortion (THD) of counter electromotive force of electromagnetic excitation force of a motor, thereby addressing vibration and noise.

The present disclosure also provides a rotor magnetizing structure of a motor to use a skew structure for the block magnet having a plurality of poles by changing a structure of a magnetizing yoke without changing a shape of the magnet.

The present disclosure further provides a skew magnetizing yoke having the skew structure.

The objects of the present disclosure are not limited to the above-mentioned objects, and other objects and advantages of the present disclosure which are not mentioned may be understood by the following description and more clearly understood based on the embodiments of the present disclosure. It will also be readily understood that the objects and the advantages of the present disclosure may be implemented by features defined in claims and a combination thereof.

According to an aspect of the present disclosure, there is provided a vibration and noise reduction motor. A ferrite block magnet having a plurality of poles of the motor has a skew structure to reduce cogging torque, torque ripple, and total harmonic distortion (THD) of counter electromotive force of electromagnetic excitation force of the motor, thereby reducing vibration and noise.

According to an embodiment of the present disclosure, the vibration and noise reduction motor may include a stator and a rotor.

The stator may be concentric with a shaft and may be axially coupled.

The rotor includes a rotor core to surround the stator and a plurality of block magnets disposed in the rotor core, to face the stator and to surround the stator, and an air gap is provided between the plurality of block magnets and the stator.

Each piece of the plurality of block magnets may include a plurality of poles. For example, each of the plurality of block magnets may be one-piece magnet having four poles.

The plurality of block magnets may be magnetized by a skew magnetizing yoke and have a continuous skew shape such that each of the plurality of poles provided for each piece are inclined by a skew angle of the skew magnetizing yoke.

The skew magnetizing yoke may apply a magnetizing magnetic field to the plurality of block magnets disposed along an inner circumferential surface of the rotor core and having a circular shape and may include a coil.

The skew magnetizing yoke may include an annular body and a plurality of skew teeth disposed on a circumferential surface of the annular body and having a shape inclined by the skew angle, and facing the block magnet when the skew magnetizing yoke applies the magnetizing magnetic field to the block magnet.

The skew magnetizing yoke may use concentrated winding wound around the teeth based on a 4-pole/3-slot combination.

The skew angle of the skew magnetizing yoke may be determined based on 360 degrees divided by least common multiple (LCM)of the number of poles P of the block magnet and the number of slots S of the stator.

For example, the skew magnetizing yoke uses the concentrated winding wound around the teeth based on a 48-pole/36-slot combination and is advantageous to have the skew angle of 2.5 degrees.

Each piece of the plurality of block magnets may include four poles. The four poles provided for each piece of the plurality of block magnets may have a continuous skew shape inclined by the skew angle.

Each piece of the plurality of block magnets may include eight skew effect generators to expect a skew effect equivalent to that of ideal four unipolar magnets having a skewed parallelogram shape. Therefore, the skew effect may be provided without complicatedly processing the magnet or changing the rotor core structure including the magnet.

According to another aspect of the present disclosure, there is provided a rotor magnetizing structure of the motor. The motor includes the block magnet with the plurality of poles, which is skewed by changing the structure of the magnetizing yoke without changing the shape of the magnet.

According to an embodiment of the present disclosure, a rotor magnetizing structure of a motor includes a rotor core and a plurality of block magnets disposed inside the rotor core and to face the stator and surround the stator, and an air gap is provided between the plurality of block magnets and the stator.

Each piece of the plurality of block magnets includes a plurality of poles and the plurality of block magnets are magnetized by the skew magnetizing yoke and may have a continuous skew shape such that the plurality of poles provided for each piece are inclined by the skew angle of the skew magnetizing yoke.

The skew magnetizing yoke may apply a magnetizing magnetic field to the plurality of block magnets disposed along the inner circumferential surface of the rotor core and having a circle shape, and may include a coil.

The skew magnetizing yoke may include an annular body and a plurality of skew teeth disposed along a circumferential surface of the annular body and inclined by the skew angle and to face the block magnet when the skew magnetizing yoke applies the magnetizing magnetic field to the block magnet.

The skew magnetizing yoke uses a concentrated winding wound around the teeth based on a 4-pole/3-slot combination. The skew angle of the skew magnetizing yoke may be determined based on 360 degrees divided by least common multiple (LCM) of the number of poles P of the block magnet and the number of slots S of the stator. For example, the skew magnetizing yoke uses the concentrated winding wound around the teeth based on 48-pole/36-slot combination and has the skew angle of about 2.5 degrees. In this case, experiments showed that cogging torque waveform and torque ripple waveform in the case of the block magnet using a skew structure are each significantly reduced when compared to the block magnet without skew angle.

Each piece of the plurality of block magnets may include four poles. The four poles provided for each piece of the plurality of block magnets may have a continuous skew shape inclined by the skew angle.

According to another aspect of the present disclosure, there is provided a skew magnetizing yoke, e.g., a magnetizing yoke having a skew structure.

According to an embodiment of the present disclosure, the skew magnetizing yoke may apply a magnetizing magnetic field to a plurality of block magnets to face the stator and surround the stator, where an air gap is provided between the plurality of block magnets and the stator, and has a skew angle. The skew magnetizing yoke may include an annular body and a plurality of skew teeth disposed along a circumferential surface of the annular body and having a shape inclined by the skew angle and to face the block magnet when the skew magnetizing yoke applies the magnetizing magnetic field to the block magnet.

The skew magnetizing yoke uses concentrated winding wound around the teeth based on 4-pole/3-slot combination and the skew angle of the skew magnetizing yoke may be determined based on 360 degrees divided by least common multiple (LCM) of the number of poles P of the block magnet and the number of slots S of the stator.

The skew magnetizing yoke uses concentrated winding wound around the teeth based on a 48-pole/37-slot combination and has the skew angle of about 2.5 degrees.

According to an embodiment of the present disclosure, a ferrite block magnet with a plurality of poles of a motor has the skew structure to reduce cogging torque, torque ripple, and total harmonic distortion (THD) of counter electromotive force of electromagnetic excitation force of the motor, thereby reducing vibration and noise occurring when the motor (e.g., the washing machine motor) is driven.

In addition, according to an embodiment of the present disclosure, in the rotor magnetizing structure of the motor, the magnetizing yoke may have a continuous yoke shape to skew the block magnet with the plurality of poles while maintaining the shape of the ferrite magnet. The rotor core or the magnet may not be manufactured with the skew structure to prevent incurrence of additional processing cost and to easily magnetize using the skew structure.

Hereafter, further effects of the present disclosure, in addition to the above-mentioned effect, is described together while describing specific matters for implementing the present disclosure.

### BRIEF DESCRIPTION OF THE DRAWINGS

FIG. 1 is a conceptual diagram showing a structure of a block magnet having a plurality of poles (e.g., one-piece magnet having four poles) in related art.
FIG. 2 shows a skew structure of a block magnet having a plurality of poles (e.g., one-piece magnet having four poles).
FIG. 3 shows an example rotor magnetizing structure of a vibration and noise reduction motor.
FIG. 4 is a perspective view showing an example skew magnetizing yoke used to implement a rotor magnetizing structure of a vibration and noise reduction motor.
FIG. 5 is a perspective view showing a skew angle of a skew magnetizing yoke used to implement a rotor magnetizing structure of a vibration and noise reduction motor.
FIG. 6 is a plan view showing an example skew magnetizing yoke used to implement a rotor magnetizing structure of a vibration and noise reduction motor.
FIG. 7 is a conceptual view showing an example skew structure of a block magnet of a rotor magnetizing structure of a vibration and noise reduction motor.
FIG. 8 shows example skew effect generators with a skew structure of a block magnet of a rotor magnetizing structure of a vibration and noise reduction motor, represented by dotted lines.
FIGS. 9A, 9B, and 9C show example various modifications of rotor magnetizing structure of a vibration and noise reduction motor.
FIG. 10 is a waveform graph showing a cogging torque reducing effect according to whether one-piece block magnet having four poles has a skew structure.
FIG. 11 is a waveform graph showing a torque ripple reducing effect according to whether one-piece block magnet having four poles has a skew structure.

### DETAILED DESCRIPTION OF EXEMPLARY IMPLEMENTATIONS

Some embodiments of the present disclosure will be described in detail with reference to the accompanying drawings, such that those skilled in the art to which the present disclosure pertains may easily implement the technical idea of the present disclosure. In the description of the present disclosure, a detailed description of the known technology relating to the present disclosure may be omitted if it unnecessarily obscures the gist of the present disclosure. Hereinafter, one or more embodiments of the present disclosure will be described in detail with reference to the accompanying drawings. Same reference numerals may be used to refer to same or similar component in the figures.

In some examples, terms such as first, second, and the like may be used herein when describing elements of the present disclosure, but the elements are not limited to those terms. These terms are intended to distinguish one element from other elements, and the first element may be a second element unless otherwise stated.

Unless otherwise stated, each component may be singular or plural throughout the disclosure.

In this document, the terms "upper," "lower," "on," "under," or the like are used such that, where a first component is arranged at "an upper portion" or "a lower portion" of a second component, the first component may be arranged in contact with the upper surface (or the lower surface) of the second component, or another component may be disposed between the first component and the second component. Similarly, where a first component is arranged on or under a second component, the first component may be arranged directly on or under (in contact with) the second component, or one or more other components may be disposed between the first component and the second component.

Further, the terms "connected," "coupled," or the like are used such that, where a first component is connected or coupled to a second component, the first component may be directly connected or able to be connected to the second component, or one or more additional components may be disposed between the first and second components, or the first and second components may be connected or coupled through one or more additional components.

As used herein, the singular forms "a," "an" and "the" are intended to include the plural forms as well, unless the context clearly indicates otherwise. In the present disclosure, it should not be construed that terms such as "including" or "comprising" necessarily include various types of components or various steps described in the present disclosure, and it should be construed terms such as "including" or "comprising" do not include some components or some steps or may include additional components or steps.

In the present disclosure, unless otherwise stated, "A and/or B" means A, B or A and B. Unless otherwise stated, "C to D" means "C or more and D or less".

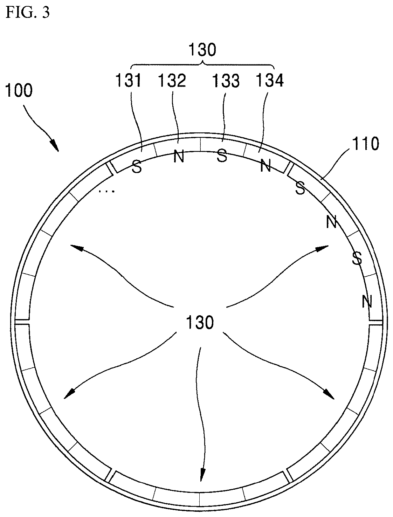

FIG. 3 shows an example rotor magnetizing structure of a vibration and noise reduction motor.

According to an embodiment of the present disclosure, a motor includes a skewed ferrite block magnet (hereinafter; referred to as "a block magnet") having a plurality of poles (e.g., four poles) to reduce cogging torque, torque ripple, and total harmonic distortion (THD) of counter electromotive force of electromagnetic excitation force. Accordingly, the vibration and the noise of the motor may be reduced.

According to an embodiment of the present disclosure, the vibration and noise reduction motor includes a stator that is concentric with a shaft and is axially coupled and a rotor 100 that surrounds the stator and an air gap is provided between the stator and the rotor.

The known form of the stator may be used without limitation and the stator may be changed to various forms for the skilled person in the art.

The rotor 100 includes a rotor core 110 and a plurality of block magnets 130.

The plurality of block magnets 130 are disposed in the rotor core 110 and form a circular shape such that the plurality of block magnets 130 surround the stator, and the air gap is provided between the plurality of block magnets 130 and the stator.

The plurality of block magnets 130 may be spaced apart from one another and may be disposed along an inner circumferential surface of the rotor core 110, and may have a circular shape.

Referring to FIG. 3, six block magnets 120 (e.g., six pieces of magnets) are disposed along the inner circumferential surface of the rotor core 110 and have a circular shape. However, this is merely an example and the present disclosure is not limited to the number and the shape of the block magnets 120.

In addition, each piece of the plurality of block magnets 130 may include a plurality of poles. Referring to FIG. 3, one-piece of block magnet includes four poles 131, 132, 133, and 134.

However, the number of poles provided for each piece of the plurality of block magnets 130 may be changed.

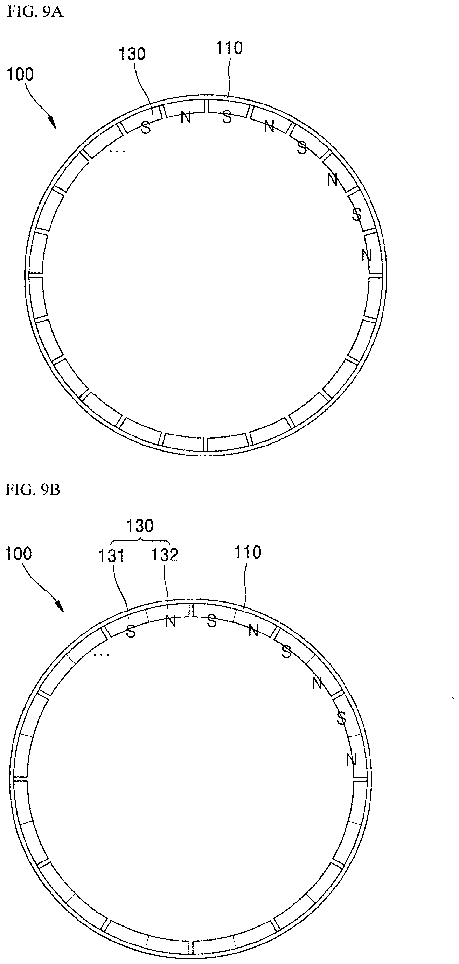

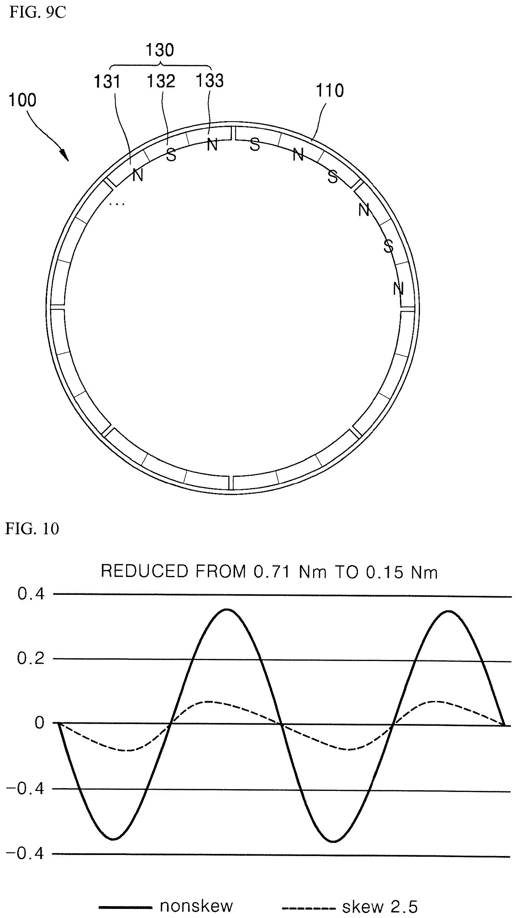

For example, a magnet 130 may have two poles 131 and 132 in one-piece (see FIG. 9B) and a magnet 130 may have three poles 131, 132 and 133 in one-piece (see FIG. 9C).

In addition, a unipolar magnet 130 may have a skew structure (see FIG. 9A). When the block magnet 130 with the plurality of poles has the skew structure, vibration and noise reduction effects may be further improved.

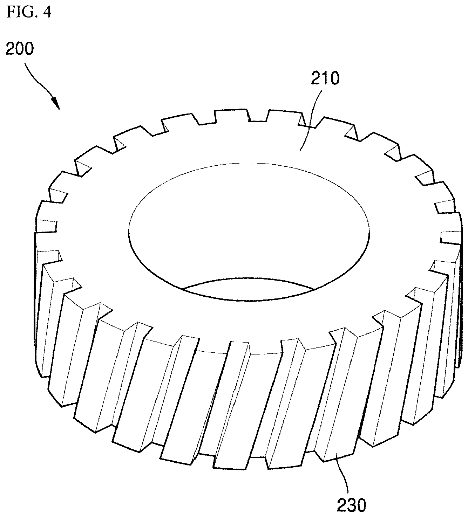

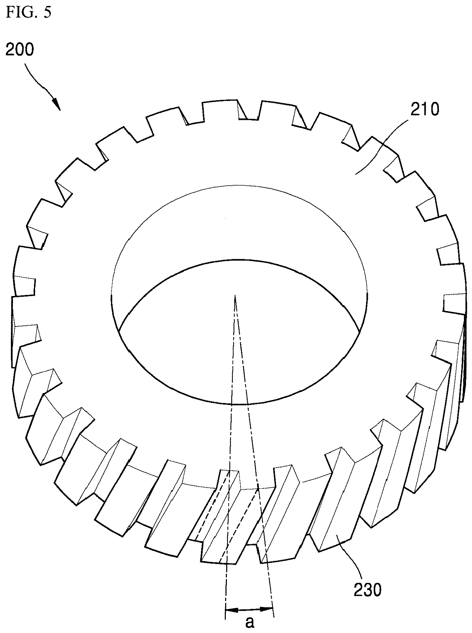

In some examples, the plurality of block magnets 130 are magnetized by a skew magnetizing yoke 200 (refer to FIGS. 4 to 6) and the plurality of poles provided for each piece may have a shape inclined by a skew angle a (see FIG. 5), that is, a continuous skew shape.

The skew magnetizing yoke is described with reference to FIGS. 4 to 6.

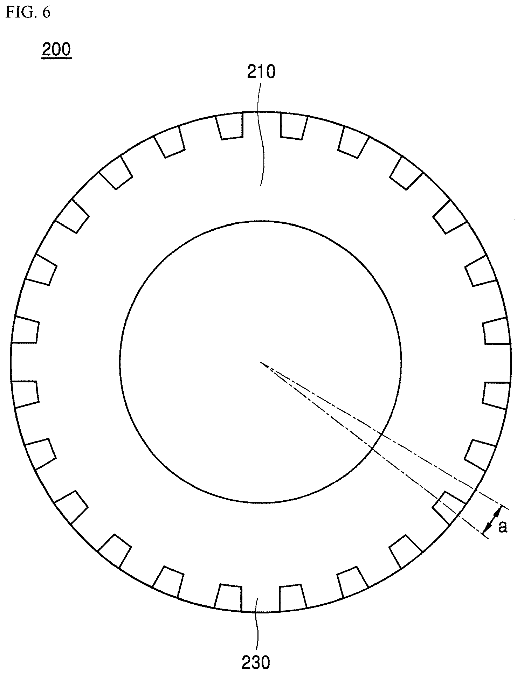

FIG. 4 is a perspective view showing an example skew magnetizing yoke used to implement a rotor magnetizing structure of a vibration and noise reduction motor. FIGS. 5 is a perspective view showing a skew angle of a skew magnetizing yoke. FIG. 6 is a plan view showing a skew angle of a skew magnetizing yoke.

According to an embodiment of the present disclosure, a skew magnetizing yoke 200 magnetizes the plurality of block magnets 130 (see FIG. 3).

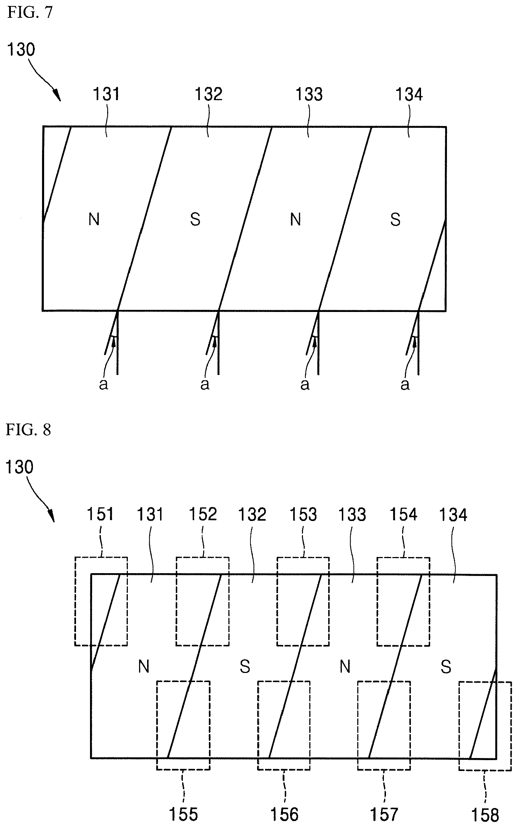

In some examples, the plurality of block magnets 130 (see FIG. 3) are magnetized by the skew magnetizing yoke 200 and the plurality of poles 131, 132, 133, and 134 provided for each piece may have a continuous skew shape (see FIG. 7) inclined by a skew angle a of the skew magnetizing yoke (see FIG. 5).

The plurality of block magnets 130 (see FIG. 3) are disposed along the inner circumferential surface of a rotor core 110 (see FIG. 3), have a circular shape, and the skew magnetizing yoke 200 applies a magnetizing magnetic field to the plurality of block magnets 130 (see FIG. 3). The skew magnetizing yoke 200 includes a coil.

In some examples, the skew magnetizing yoke 200 includes an annular body 210 and a plurality of skew teeth 230.

The teeth of the skew magnetizing yoke 200 have a continuous skew shape, which is referred to as "a skew teeth 230".

For example, the plurality of skew teeth 230 are disposed along a circumferential surface of the annular body 210 and has a shape inclined in a predetermined direction by a set skew angle a (see FIG. 6).

The plurality of skew teeth 230 face the plurality of block magnets 130 (see FIG. 3) to apply the magnetizing magnetic field to the plurality of block magnets 130 (see FIG. 3).

In some examples, the skew magnetizing yoke 200 may use concentrated winding wound around the teeth based on a 4-pole/3-slot combination.

In addition, the skew angle a (see FIG. 5) of the skew magnetizing yoke 200 may be determined based on 360 degrees divided by least common multiple (LCM) of the number of poles P of the block magnet 130 (see FIG. 3) and the number of slots S of the stator.

For example, according to an embodiment of the present disclosure, the skew magnetizing yoke 200 uses a concentrated winding wound around the teeth based on a 48-pole/36-slot combination and the skew teeth 230 of the skew magnetizing yoke 200 may have a skew angle of 2.5 degrees.

The plurality of block magnets 130 (see FIG. 7) may have the skew structure by the skew magnetizing yoke 200 using the concentrated winding wound around the teeth based on the 48-pole/36-slot combination and having a skew angle a of 2.5 degrees.

Referring to FIG. 7, each piece of a plurality of block magnets 130 having a skew structure by applying, by the skew magnetizing yoke 200, a magnetizing magnetic field to the plurality of block magnets 130 includes a plurality of poles 131, 132, 133, and 134.

In some examples, each piece of the plurality of block magnets 130 may have four poles 131, 132, 133, and 134.

In addition, the four poles 131, 132, 133, and 134 provided for each piece have a continuous skew shape inclined by the skew angle a (see FIG. 7).

Referring to FIG. 8, each piece of the plurality of block magnets 130 may include eight skew effect generators 151, 152, 153, 154, 155, 156, 157, and 158.

According to an embodiment of the present disclosure, one piece of the plurality of block magnets 130 having the four poles may include skew effect generating portions, that is, the eight skew effect generators 151, 152, 153, 154, 155, 156, 157, and 158 by using the skew magnetizing yoke 200 (see FIG. 4).

The shape of the unipolar magnet (e.g., having one pole) is changed to a parallelogram shape and the unipolar magnet with the changed parallelogram shape has a four-piece magnet structure with four poles. This configuration has the same number of skew effect generators (e.g., eight skew effect generators) as one piece of the plurality of block magnets 130 having the four poles. to reduce processing cost incurred due to changes in shapes of magnet and the rotor core and improve the skew effect.

For example, the block magnet 130 maintains the shape and uses a skew magnetizing yoke 200 (see FIG. 4) including a skew-shaped teeth, that is, a skew teeth 230 (see FIG. 4) to generate an equivalent effect to that of an ideal skew structure.

FIG. 10 is a waveform graph showing a cogging torque reducing effect according to whether one-piece block magnet having four poles has a skew structure.

Referring to FIG. 10, cogging torque waveform is compared between an example (skew 2.5) in which a block magnet has a skew angle of 2.5 degrees using the skew magnetizing yoke and a comparison example (nonskew) in which a block magnet does not have a skew structure.

As shown, a cogging torque value is significantly reduced (e.g., reduced from 0.71 Nm to 0.15 Nm) when the block magnet has the skew structure using the skew magnetizing yoke using concentrated winding wound around the teeth based on a 48-pole/36-slot combination and having a skew angle of 2.5 degrees compared to the block magnet without the skew structure.

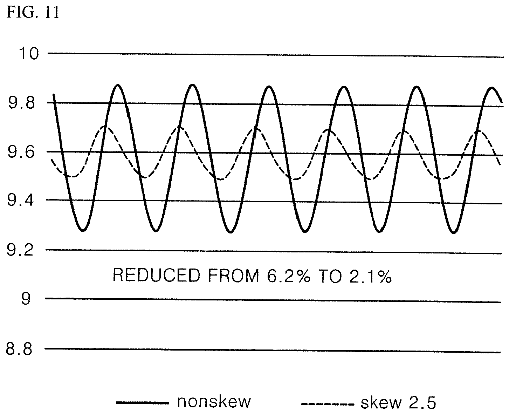

FIG. 11 is a waveform graph showing a torque ripple reducing effect depending on whether a one-piece block magnet having four poles has a skew structure.

Referring to FIG. 11, torque ripple waveforms are compared between an example (skew 2.5) in which a block magnet has a skew angle of 2.5 degrees using the skew magnetizing yoke and a comparative example (nonskew) in which a block magnet has no skew structure.

As shown, a torque ripple value is significantly reduced (e.g., reduced from 6.2% to 2.1%) when a block magnet has the skew structure (see FIG. 7) using the skew magnetizing yoke using a concentrated winding wound around teeth based on a 48-pole/36-slot combination and having a skew angle of 2.5 degrees compared to the block magnet with no skew structure.

According to the configuration of the present disclosure, the motor includes the ferrite block magnet having the plurality of poles. The ferrite block magnet has the skew structure to reduce cogging torque, torque ripple, and total harmonic distortion (THD) of counter electromotive force of electromagnetic excitation force of the motor.

Accordingly, vibration and noise generated when the motor (e.g., the washing machine motor) is driven may be reduced.

In addition, the shape of the ferrite magnet may be maintained and the magnetizing yoke may have a continuous skew shape to skew the block magnet with the plurality of poles of the rotor magnetizing structure of the motor.

Accordingly, the rotor core or the magnet may not need to be fabricated in the skew structure to prevent incurrence of additional processing cost and easily magnetize the rotor core or the magnet to have the skew structure.

Although the present disclosure has been described as described above with reference to exemplary drawings, the present disclosure is not limited to the embodiments and drawings disclosed herein, and various modifications may be made by those skilled in the art within the scope of the technical idea of the present disclosure. Further, even if working effects obtained based on configurations of the present disclosure are not explicitly described in the description of embodiments of the present disclosure, effects predictable based on the corresponding configuration have to be recognized.

### [Description of Symbols]

- 10 and 20:: Block magnet in related art
- 100:: Rotor
- 110:: Rotor core
- 130:: Block magnet (or one-piece magnet)
- 131, 132, 133, and 134:: Pole
- 151, 152, 153, 154, 155, 156, 157, and 158:: Skew effect generator
- 200:: Skewer magnetizing yoke
- 210:: Annular body
- 230:: Skew teeth

## Claims

1. A vibration and noise reduction motor, comprising:
a stator that is concentric with and axially coupled to a shaft; and
a rotor that includes:
a rotor core that surrounds the stator, and
a plurality of block magnets that are located in the rotor core and that are oriented to face the stator,
wherein an air gap exists between the plurality of block magnets and the stator,
wherein each of the plurality of block magnets comprises a plurality of poles, and
wherein the plurality of block magnets are magnetized by a skew magnetizing yoke and have a continuous skew shape in which each of the plurality of poles is inclined by a skew angle of the skew magnetizing yoke.

2. The vibration and noise reduction motor of claim 1:
wherein the plurality of block magnets are located along an inner circumferential surface of the rotor core and have a circular shape,
wherein the skew magnetizing yoke is configured to apply a magnetizing magnetic field to the plurality of block magnets, and
wherein the skew magnetizing yoke comprises a coil.

3. The vibration and noise reduction motor of claim 1 or 2, wherein the skew magnetizing yoke comprises an annular body and a plurality of skew teeth that are located on a circumferential surface of the annular body and that have a shape inclined by the skew angle, and
wherein, based on the skew magnetizing yoke applying the magnetizing magnetic field to the plurality of block magnets, the plurality of skew teeth face the plurality of block magnets.

4. The vibration and noise reduction motor of claim 1 to 3, wherein the skew magnetizing yoke is configured to wind, by concentrated winding based on a 4-pole/3-slot combination, around the plurality of skew teeth.

5. The vibration and noise reduction motor of claim 4, wherein the skew angle of the skew magnetizing yoke is determined by dividing 360 degrees by a least common multiple (LCM) of a number of poles of the plurality of block magnets and a number of slots of the stator.

6. The vibration and noise reduction motor of claim 1 to 3, wherein the skew magnetizing yoke is configured to wind, by concentrated winding based on a 48-pole/36-slot combination and a skew angle of 2.5 degrees, around the plurality of skew teeth.

7. The vibration and noise reduction motor of claim 1 to 6, wherein each of the plurality of block magnets comprises four poles.

8. The vibration and noise reduction motor of claim 7, wherein the four poles of each of the plurality of block magnets are configured to have the continuous skew shape inclined by the skew angle.

9. The vibration and noise reduction motor of claim 8, wherein each of the plurality of block magnets comprises eight skew effect generators.

10. A rotor magnetizing structure, comprising:
a rotor core; and
a plurality of block magnets that are located in the rotor core and that are oriented to face a stator, wherein an air gap exists between the plurality of block magnets and the stator,
wherein each of the plurality of block magnets comprises a plurality of poles,
wherein the plurality of block magnets are magnetized by a skew magnetizing yoke and have a continuous skew shape in which the plurality of poles are inclined by a skew angle of the skew magnetizing yoke,
wherein the plurality of block magnets are located along an inner circumferential surface of the rotor core and have a circular shape, wherein the skew magnetizing yoke is configured to apply a magnetizing magnetic field to the plurality of block magnets, and wherein the skew magnetizing yoke comprises a coil, and
wherein the skew magnetizing yoke comprises:
an annular body, and
a plurality of skew teeth that are located on a circumferential surface of the annular body and that have a shape inclined by the skew angle, and
wherein, based on the skew magnetizing yoke applying the magnetizing magnetic field to the plurality of block magnets, the plurality of skew teeth face the plurality of block magnets.

11. The rotor magnetizing structure of claim 10, wherein the skew magnetizing yoke is configured to wind, by concentrated winding based on a 4-pole/3-slot combination, around the plurality of skew teeth,
wherein the skew angle of the skew magnetizing yoke is determined by dividing 360 degrees by least common multiple (LCM) of a number of poles of the plurality of block magnets and a number of slots of the stator.

12. The rotor magnetizing structure of claim 10, wherein the skew magnetizing yoke is configured to wind, by concentrated winding based on a 48-pole/36-slot combination and a skew angle of 2.5 degrees, around the plurality of skew teeth.

13. The rotor magnetizing structure of claim 10 to 12, wherein each of the plurality of block magnets comprises four poles,
wherein the four poles of each of the plurality of block magnets are configured to have the continuous skew shape inclined by the skew angle,
wherein the each of the plurality of block magnets comprises eight skew effect generators.

14. A skew magnetizing yoke that is located in a rotor core and that has a skew angle, the skew magnetizing yoke being oriented to face a stator, and configured to apply a magnetizing magnetic field to a plurality of block magnets, wherein an air gap exists between the plurality of block magnets and the stator,
wherein the skew magnetizing yoke comprises an annular body and a plurality of skew teeth that are located on a circumferential surface of the annular body and that have an inclined shape by the skew angle, and based on the skew magnetizing yoke applying the magnetizing magnetic field to the plurality of block magnets, the plurality of skew teeth face the plurality of block magnets,
wherein the skew magnetizing yoke is configured to wind, by concentrated winding based on a 4-pole/3-slot combination, around the plurality of teeth, and
wherein the skew angle of the skew magnetizing yoke is determined by dividing 360 degrees by least common multiple (LCM) of a number of poles of the plurality of block magnets and a number of slots of the stator.

15. The skew magnetizing yoke of claim 14, wherein the skew magnetizing yoke is configured to wind, by concentrated winding based on a 48-pole/36-slot combination and a skew angle of 2.5 degrees, around the plurality of teeth.
